# EUROPEAN PATENT APPLICATION

(11) **EP 4 592 733 A1**
(43) Date of publication of application: **30.07.2025**
(21) Application number: 25152427.8
(22) Date of filing: 17.01.2025
(51) Int. Cl.: G02B 27/00, G02B 27/01

(54) **STACKED OPTICAL WAVEGUIDE WITH RESPECTIVE FACET ANGLES**

(30) Priority: 23.01.2024 IL 31035124
(71) Applicant: Lumus Ltd., 7403631 Ness Ziona (IL)
(72) Inventor: EISENFELD, Tsion, 7835515 Ashkelon (IL)
(74) Representative: Kancelaria Eupatent.pl Sp. z.o.o

(57) **Abstract**

Described herein is an apparatus which may contain a first waveguide with a first waveguide second major surface and a second waveguide with a second waveguide first major surface that is separated from the first waveguide second major surface by a separation layer. The apparatus may further contain a coupling-in element configured to couple in a first beam into the first waveguide at a first angle of incidence and couple in a second beam into the second waveguide at a second angle of incidence that is greater than the first angle of incidence. The apparatus may also contain a first group of facets arranged in the first waveguide configured to couple out the first beam out of the first waveguide and a second group of facets arranged in the second waveguide and configured to couple out the second beam out of the second waveguide.

## Description

### BACKGROUND

Unless otherwise indicated herein, the materials described in this section are not prior art to the claims in this application and are not admitted to be prior art by inclusion in this section.

The present disclosure relates in general to systems and methods of presenting information to a user, more particularly, to optical systems and near eye displays for presenting information to a user.

Wearable optical devices, such as near eye displays or smart glasses, are often limited to a single facet angle for an entire field of view in a certain dimension (e.g., left/right, up/down). Thus, designers must weigh the benefits of smaller facet angles (e.g., diffraction limits being greater, larger apertures) against larger facet angles (e.g., larger fields of view). Furthermore, conventional techniques provide a single resolution across the certain dimension (e.g., they are incapable of providing a foveated display of information). What is needed is a solution that addresses these issues, and others.

### SUMMARY

An apparatus (e.g., stacked optical waveguide) is generally described. In some implementations, the apparatus may include a first waveguide with a first waveguide first major surface and a first waveguide second major surface. The apparatus may also include a second waveguide with a second waveguide first major surface and a second waveguide second major surface. The second waveguide first major surface may be separated from the first waveguide second major surface by a separation layer. The apparatus may also include a coupling-in element configured to couple in a first beam into the first waveguide at a first angle of incidence that is greater than a critical angle of the first waveguide. The coupling-in element may also be configured to couple in a second beam into the second waveguide at a second angle of incidence that is greater than the first angle of incidence. The apparatus may also include a first group of facets arranged in the first waveguide between the first waveguide first major surface and the first waveguide second major surface and configured to couple out the first beam out of the first waveguide. The apparatus may also include a second group of facets arranged in the second waveguide between the second waveguide first major surface and the second waveguide second major surface and configured to couple out the second beam out of the second waveguide.

In some implementations, the apparatus may include a first waveguide with a first waveguide first major surface and a first waveguide second major surface. The apparatus may also include a second waveguide with a second waveguide first major surface and a second waveguide second major surface. The second waveguide first major surface may be separated from the first waveguide second major surface by a separation layer. The apparatus may also include a coupling-in element configured to couple in a first beam into the first waveguide at a first angle of incidence that is greater than a critical angle of the first waveguide. The coupling-in element may also be configured to couple in a second beam into the second waveguide at a second angle of incidence that is greater than the first angle of incidence. The apparatus may also include a first group of facets arranged in the first waveguide between the first waveguide first major surface and the first waveguide second major surface and configured to couple out the first beam out of the first waveguide. The apparatus may also include a second group of facets arranged in the second waveguide between the second waveguide first major surface and the second waveguide second major surface and configured to couple out the second beam out of the second waveguide. The apparatus may also include a third group of facets arranged in the second waveguide between the second waveguide first major surface and the second waveguide second major surface and configured to couple out the second beam out of the second waveguide. The first waveguide first major surface, the first waveguide second major surface, the second waveguide first major surface, and the second waveguide second major surface may extend along a facet axis. The first waveguide and the second waveguide may be superimposed along a normal axis that is orthogonal to the facet axis. The first group of facets may be arranged in the first waveguide at a first position along the facet axis. At least a portion of the second group of facets may be arranged in the second waveguide at a second position along the facet axis that is different from the first position along the facet axis. At least a portion of the third group of facets may be arranged in the second waveguide at a third position along the facet axis that is different from the first position. The first position along the facet axis may be between the second position along the facet axis and the third position along the facet axis.

In some implementations, the apparatus may include a first waveguide with a first waveguide first major surface and a first waveguide second major surface. The apparatus may also include a second waveguide with a second waveguide first major surface and a second waveguide second major surface. The second waveguide first major surface may be separated from the first waveguide second major surface by a separation layer. The apparatus may also include a coupling-in element configured to couple in a first beam into the first waveguide at a first angle of incidence that is greater than a critical angle of the first waveguide. The coupling-in element may also be configured to couple in a second beam into the second waveguide at a second angle of incidence that is greater than the first angle of incidence. The apparatus may also include a first group of facets arranged in the first waveguide between the first waveguide first major surface and the first waveguide second major surface and configured to couple out the first beam out of the first waveguide. The apparatus may also include a second group of facets arranged in the second waveguide between the second waveguide first major surface and the second waveguide second major surface. The apparatus may also include a homogenizer arranged in the second waveguide between the coupling-in element and the second group of facets and configured to duplicate the second beam effective to increase a number of beams that are reflected within the second waveguide and incident on the second group of facets. The second group of facets may be configured to couple out the beams (e.g., the second beam and the duplicate of the second beam) that are reflected within the second waveguide out of the second waveguide.

In some implementations, the apparatus may include a first waveguide with a first waveguide first major surface and a first waveguide second major surface. The apparatus may also include a second waveguide with a second waveguide first major surface and a second waveguide second major surface. The second waveguide first major surface may be separated from the first waveguide second major surface by a separation layer. The apparatus may also include a coupling-in element configured to couple in a first beam into the first waveguide at a first angle of incidence that is greater than a critical angle of the first waveguide. The coupling-in element may also be configured to couple in a second beam into the second waveguide at a second angle of incidence that is greater than the first angle of incidence. The coupling-in element may contain a partially-reflective element configured to couple in the first beam into the first waveguide at the first angle of incidence and pass a portion of an incident beam to a reflective element. The coupling-in element may also contain the reflective element configured to couple in the second beam into the second waveguide at the second angle of incidence. The apparatus may also include a first group of facets arranged in the first waveguide between the first waveguide first major surface and the first waveguide second major surface and configured to couple out the first beam out of the first waveguide. The apparatus may also include a second group of facets arranged in the second waveguide between the second waveguide first major surface and the second waveguide second major surface.

In some implementations, the apparatus may include a first waveguide with a first waveguide first major surface and a first waveguide second major surface. The apparatus may also include a second waveguide with a second waveguide first major surface and a second waveguide second major surface. The second waveguide first major surface may be separated from the first waveguide second major surface by a separation layer. The apparatus may also include a coupling-in element configured to couple in a first beam into the first waveguide at a first angle of incidence that is greater than a critical angle of the first waveguide. The coupling-in element may also be configured to couple in a second beam into the second waveguide at a second angle of incidence that is greater than the first angle of incidence. The coupling-in element may contain a partially-reflective element configured to couple in the first beam into the first waveguide at the first angle of incidence and pass a portion of an incident beam to a reflective element. The coupling-in element may also contain the reflective element configured to couple in the second beam into the second waveguide at the second angle of incidence. The apparatus may also include a first group of facets arranged in the first waveguide between the first waveguide first major surface and the first waveguide second major surface and configured to couple out the first beam out of the first waveguide. The apparatus may also include a second group of facets arranged in the second waveguide between the second waveguide first major surface and the second waveguide second major surface. The partially-reflective element and the reflective element do not overlap or at least partially overlap when viewed along a normal direction that is normal to the first waveguide first major surface, the first waveguide second major surface, the second waveguide first major surface, and the second waveguide second major surface.

In some implementations, the apparatus may include a first waveguide with a first waveguide first major surface and a first waveguide second major surface. The apparatus may also include a second waveguide with a second waveguide first major surface and a second waveguide second major surface. The second waveguide first major surface may be separated from the first waveguide second major surface by a separation layer. The apparatus may also include a coupling-in element configured to couple in a first beam into the first waveguide at a first angle of incidence that is greater than a critical angle of the first waveguide. The coupling-in element may also be configured to couple in a second beam into the second waveguide at a second angle of incidence that is greater than the first angle of incidence. The coupling-in element may contain a beam splitter. The beam splitter may be configured to: split an incident beam into a reflected beam and a transmitted beam, couple in the reflected beam into the first waveguide, and couple in the transmitted beam into the second waveguide. The reflected beam may be the first beam and the transmitted beam may be the second beam. The apparatus may also include a first group of facets arranged in the first waveguide between the first waveguide first major surface and the first waveguide second major surface and configured to couple out the first beam out of the first waveguide. The apparatus may also include a second group of facets arranged in the second waveguide between the second waveguide first major surface and the second waveguide second major surface.

In some implementations, the apparatus may include a first waveguide with a first waveguide first major surface and a first waveguide second major surface. The apparatus may also include a second waveguide with a second waveguide first major surface and a second waveguide second major surface. The second waveguide first major surface may be separated from the first waveguide second major surface by a separation layer. The apparatus may also include a coupling-in element configured to couple in a first beam into the first waveguide at a first angle of incidence that is greater than a critical angle of the first waveguide. The coupling-in element may also be configured to couple in a second beam into the second waveguide at a second angle of incidence that is greater than the first angle of incidence. The coupling-in element may contain a prism and a beam splitter. The prism may be configured to refract an incident beam towards the beam splitter. The beam splitter may be configured to: split the refracted incident beam into a reflected beam and a transmitted beam, couple in the reflected beam into the first waveguide, and couple in the transmitted beam into the second waveguide. The reflected beam may be the first beam and the transmitted beam may be the second beam. The apparatus may also include a first group of facets arranged in the first waveguide between the first waveguide first major surface and the first waveguide second major surface and configured to couple out the first beam out of the first waveguide. The apparatus may also include a second group of facets arranged in the second waveguide between the second waveguide first major surface and the second waveguide second major surface.

In some implementations, the apparatus may include a first waveguide with a first waveguide first major surface and a first waveguide second major surface. The apparatus may also include a second waveguide with a second waveguide first major surface and a second waveguide second major surface. The second waveguide first major surface may be separated from the first waveguide second major surface by a separation layer. The apparatus may also include a coupling-in element configured to couple in a first portion of an incident beam into the first waveguide at an angle of incidence that is greater than a critical angle of the first waveguide to create a first beam. The coupling-in element may also be configured to couple in a second portion of the incident beam into the second waveguide at the angle of incidence to create a second beam. The apparatus may also include a first group of facets arranged in the first waveguide between the first waveguide first major surface and the first waveguide second major surface and configured to partially reflect the first beam to create a reflected beam with an angle of incidence that is lower than the first angle of incidence and a transmitted beam at the first angle of incidence and couple out the reflected beam out of the first waveguide. The apparatus may also include a second group of facets arranged in the second waveguide between the second waveguide first major surface and the second waveguide second major surface and configured to couple out the second beam out of the second waveguide.

The foregoing summary is illustrative only and is not intended to be in any way limiting. In addition to the illustrative aspects, embodiments, and features described above, further aspects, embodiments, and features will become apparent by reference to the drawings and the following detailed description. In the drawings, like reference numbers indicate identical or functionally similar elements.

### BRIEF DESCRIPTION OF THE DRAWINGS

Fig. 1 illustrates a block diagram of an example optical system containing a stacked optical waveguide, in accordance with various examples of the present disclosure.
Fig. 2 illustrates a top plan view of an example stacked optical waveguide, in accordance with various examples of the present disclosure.
Fig. 3 illustrates a top plan view of another example stacked optical waveguide, in accordance with various examples of the present disclosure.
Fig. 4 illustrates a top plan view of another example stacked optical waveguide, in accordance with various examples of the present disclosure.
Fig. 5 illustrates a top plan view of another example stacked optical waveguide, in accordance with various examples of the present disclosure.
Fig. 6 illustrates a top plan view of another example stacked optical waveguide, in accordance with various examples of the present disclosure.
Fig. 7 illustrates a top plan view of another example stacked optical waveguide, in accordance with various examples of the present disclosure.

### DETAILED DESCRIPTION

In the following description, numerous specific details are set forth, such as particular structures, components, materials, dimensions, processing steps and techniques, in order to provide an understanding of the various embodiments of the present application. However, it will be appreciated by one of ordinary skill in the art that the various embodiments of the present application may be practiced without these specific details. In other instances, well-known structures or processing steps have not been described in detail in order to avoid obscuring the present application.

To be described in more detail below, a wearable device, such as a near eye display and/or smart glasses, can be implemented by a system and method described in accordance with the present disclosure. The system can efficiently provide high quality optical information to a user in various applications.

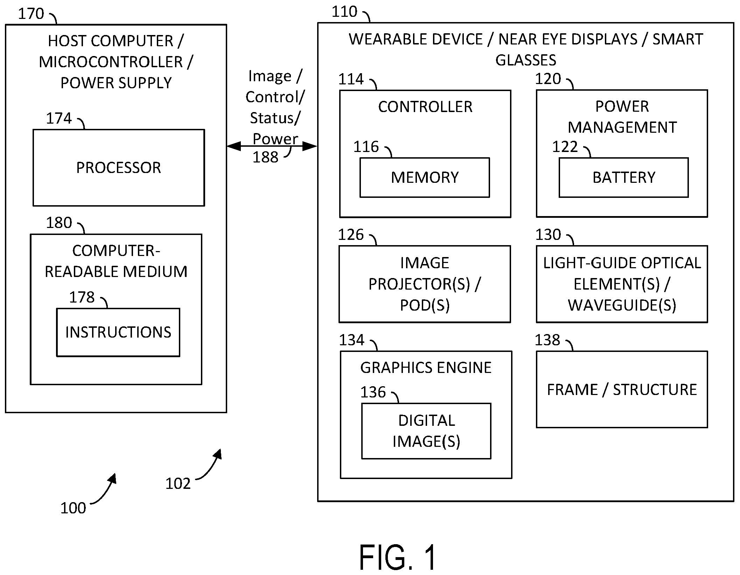

Fig. 1 illustrates a block diagram of an example optical system, in accordance with various examples of the present disclosure. Optical system 100 may include two or more devices or components. Optical system 100 may be implemented generally as a hybrid system including various electronic, optical, and electro-optical elements. An optical device 102 may include one or more elements from optical system 100. To be described in more detail below, an optical system 100 may include a wearable device 110, such as one or more near eye displays or smart glasses, which may be worn on or about the head of a user to convey optical information to one or more eyes of a user.

Wearable device 110 may include a controller 114 with a memory 116 where controller 114 may be configured to send and receive electrical signals to various other elements in optical system 100, to execute program instructions stored in memory 116 in order to process and provide information, to operate wearable device 110, and to interact with other systems outside wearable device 110, for example. Controller 114 may include a microcontroller, a processor, various discrete components, programmable logic devices, and/or various interface circuits that may access memory 116 which may be removable, replaceable, programmable, and reprogrammable to update instructions to controller 114.

Wearable device 110 may also include a power management module 120 having a battery 122, where power management module 120 may be configured to charge, discharge, and monitor power usage for battery 122. Various elements of wearable device 110 may receive power from battery 122, including controller 114, one or more image projector(s) 126 (e.g., a projecting optical device, or POD), and optical engine 134 having one or more digital images 136, for example.

Wearable device 110 may also include one or more image projectors 126, each configured to produce a collimated image beam based on a digital image 136. The collimated image beam may be an illuminated representation of the digital image having an image field which is a two-dimensional representation of the digital image based on either a single graphical image (e.g., a static image) or a sequence of graphical images (e.g., a moving image). The collimated image beam may be collimated to infinity.

Wearable device 110 may also include one or more light-guide optical elements 130 (e.g., LOEs, also denoted as waveguides WGs, stacked optical waveguide) comprising transparent materials configured to receive and propagate light, where light may enter into and exit from various external and internal surfaces of light-guide optical element 130. For example, the transparent material comprising light-guide optical element 130 may include optical glass or other suitable material that is transformed into complex optical structures using a process that may include coating, stacking, slicing, polishing, and shaping the transparent materials. The process may include the addition of partially reflective or fully reflective materials such as mirror coatings, for example. Similarly, the process may also include the addition of partially opaque or fully opaque materials such as light covers to block light, for example.

Wearable device 110 may also include one or more optical engines 134 coupled to the one or more image projectors 126 and light-guide optical elements 130. Optical engine 134 may be configured to directly operate image projector 126 under the direction of the controller 114. For example, optical engine 134 may provide graphics processing for the digital image before projection of an illuminated representation of the digital image by image projector 126.

Wearable device 110 may also include a frame 138 (e.g., a structure) for supporting and retaining one or more elements in wearable device 110. For example, frame 138 may support and retain a first image projector 126a in position next to a first light-guide optical element 130a. Similarly, frame 138 may support and retain a second image projector 126b in position next to a second light-guide optical element 130b. In this manner, frame 138 may support and retain one or two image projector 126 and light-guide optical element 130 pairs on or about the head of a user. References are made herein regarding the orientation of various elements relative to each other. such references may also include reference to various elements of wearable device 110 when supported by frame 138 or in reference to a three-dimensional (3D) reference (e.g., X,Y,Z axes), as described in the relevant drawing figure.

Optical system 100 may also include a host computer 170 that may include a processor 174 configured to read and execute operations based on instructions 178 stored in a computer-readable medium 180. Instructions 178 may include at least some instructions provided to controller 114 and stored in memory 116. Host computer 170 may communicate with one or more elements of wearable device 110 over a signal and power bus 188. In this manner, host computer 170 may provide power to charge battery 122, provide instructions to and receive status from controller 114 and various other elements of wearable device 110, and to provide digital image data to optical engine 134.

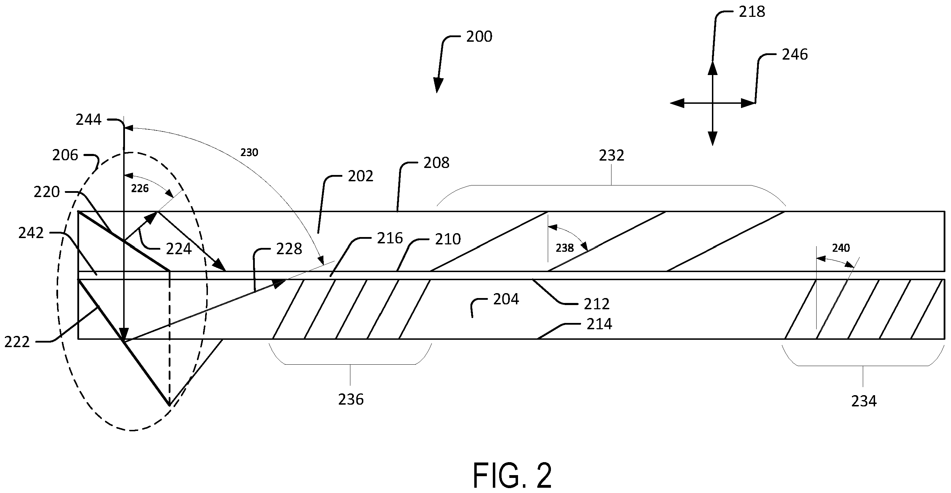

Fig. 2 illustrates a top plan view of a stacked optical waveguide 200, in accordance with various examples of the present disclosure. The stacked optical waveguide 200 may be an example of the light-guide optical element 130, as discussed above, and may act as an aperture expander. Although Fig. 2 is illustrated as a top plan view (e.g., left/right on page corresponds to left/right view axis of a user), the stacked optical waveguide 200 may be implemented along other axes (e.g., up/down) without departing from the scope of this disclosure.

The stacked optical waveguide 200 can include a first waveguide 202, a second waveguide 204, and a coupling-in element 206. The coupling-in element 206 may be contained by portions of the first waveguide 202 and the second waveguide 204 or be a separate component attached thereto.

The first waveguide 202 contains a first waveguide first major surface 208 and a first waveguide second major surface 210. The second waveguide 204 contains a second waveguide first major surface 212 and a second waveguide second major surface 214. The major surfaces are configured to cause total internal reflection (TIR) within the respective waveguides when the beam angles are greater than the critical angles of the waveguides and to allow the beams to exit the waveguides when the beam angles are less than the critical angles of the waveguides (e.g., perpendicular to the major surfaces).

The first waveguide 202 is separated from the second waveguide 204 by a separation layer 216, which may be an air gap, a low refractive index layer, or a low refractive index adhesive. It should be noted that the separation layer 216 may not extend into the coupling-in element 206. That is, if the coupling-in element 206 is formed within same substrates as the first and second waveguides 202, 204 (as shown), then a coupling-in separation layer 242 may exist between portions of the coupling-in element 206. The coupling-in separation layer 242 may comprise an index matching material (e.g., high refractive index adhesive, layer, or material). Alternatively, the coupling-in element 206 may be formed as a separate structure and connected to ends of the first and second waveguides 202, 204 (e.g., with an index matching adhesive). Such implementations of the coupling-in element 206 would look similar to the coupling-in elements 506 and 606, but with different reflective elements.

The first waveguide 202 and the second waveguide 204 may be stacked along a normal axis 218 that is normal to the first waveguide first major surface 208, the first waveguide second major surface 210, the second waveguide first major surface 212, and the second waveguide second major surface 214. Orthogonal to the normal axis 218 is a facet axis 246, which is discussed further below.

The coupling-in element 206 is configured to receive an incident beam 244 (e.g., a collimated image beam) and couple-in the incident beam 244 or portions thereof into the first and second waveguides 202, 204. The incident beam 244 may come from an image projector or pod (e.g., one of image projectors 126) or from an aperture expander working along another axis (e.g., up/down). Although illustrated as parallel to the normal axis 218, the incident beam 244 may enter the coupling-in element 206 at any angle.

In the illustrated example, the coupling-in element 206 contains a partially-reflective element 220 and a reflective element 222. The partially-reflective element 220 is configured to reflect a portion of the incident beam 244 to create a first beam 224 that enters the first waveguide 202 at a first beam incident angle 226. The first beam incident angle 226 may be greater than a critical angle of the first waveguide (e.g., between 45 degrees and 55 degrees from the normal axis 218). The partially-reflective element 220 is further configured to pass the remaining portion of the incident beam 244 (e.g., that which wasn't reflected to create the first beam 224) to the reflective element 222. The reflective element 222 is configured to reflect the remaining portion of the incident beam 244 to create a second beam 228 that enters the second waveguide 204 at a second beam incident angle 230. The second beam incident angle 230 may be greater than a critical angle of the second waveguide and greater than the first beam incident angle 226 (e.g., between 55 degrees and 89 degrees from the normal axis 218). The partially-reflective element 220 and the reflective element 222 may be both obliquely angled (e.g., relative to the normal axis 218 and the facet axis 246) and have different surface coatings.

As shown, the reflective element 222 may have a shallower angle relative to the normal axis 218. Accordingly, a portion of the coupling-in element 206 may extend beyond the second waveguide second major surface 214. Doing so enables a projected width or profile of the reflective element 222 and the partially-reflective element 220 (e.g., along the facet axis 246 and/or a projected profile when viewed along the normal axis 218) to be the same (e.g., coincident). This causes the reflective element 222 to receive an entire cross section of light transmitted through the partially-reflective element 220. The extension may be a triangular structure, as shown, which is adhered to the second waveguide second major surface via an index matching adhesive. As such, both the partially-reflective element 220 and the reflective element 222 may receive an entire aperture width of the incident beam 224.

The first and second waveguides 202, 204 contain facets configured to couple-out the beams out of the first and second waveguides 202, 204 (e.g., for receipt by an eye of a user). The facets are also configured to allow portions of the beams to transmit through the facets to adjacent facets (for coupling-out by the adjacent facets). The first waveguide 202 contains a first group of facets 232. The second waveguide contains a second group of facets 234 and a third group of facets 236. The first group of facets 232 may have a first facet angle 238 relative to the normal axis 218 and the second and third group of facets 234, 236 may have a second facet angle 240 relative to the normal axis 218. Thus, the first, second, and third groups of facets 232, 234, 236 may be obliquely angled relative to the normal axis 218 and the facet axis 246. The second facet angle 240 may be less than the first facet angle 238. The second and third group of facets 234, 236 may be arranged along the facet axis 246 such that they surround the first group of facets 232 (e.g., the first group of facets 232 is between the second group of facets 234 and the third group of facets 236 when viewed along the normal axis 218). In the illustrated example, the third group of facets 232 is closer to the coupling-in element 206 than the first group of facets 232.

By having two waveguides with three groups of facets with respective facet angles, a foveated image (e.g., one with varying resolutions over at least one dimension) may be produced. Doing so may enable the stacked optical waveguide 200 to take advantage of positive aspects of varying facet angles (e.g., higher acquity/larger aperture in a center of the projected image and larger field of view away from the center).

Each of the facets (along with the partially-reflective element 220 and the reflective element 222) may be an at least partially reflective optical structure with a flat surface. Each facet (or element) may include an angularly selective coating which may have an optical axis that deviates from a normal angle to the coating so as to selectively pass or attenuate illumination having the same or a different orientation, respectively.

As used herein, each group of facets may include a plurality of planar, mutually-parallel and partially reflecting optical elements (e.g., facets) spaced apart from each other. Hence, each of the facets of a respective group may be parallel to each other and disposed at the same oblique angle. Also, the facets described herein may include an angularly selective coating and may be controlled to have multiple states (e.g., on/off) or to change a level of reflectivity and/or transmissivity of each facet or a cooperative collection of facets in a structure. A final facet (e.g., a terminal facet, furthest right facet in the first group of facets 232 and in the second group of facets 234) in a structure may be fully mirrored (e.g., not partially mirrored) to reflect any remaining illumination that may have passed through the prior facets in the structure. Alternatively, each facet may have the same partial reflectivity for consistency, reduced complexity, and simpler construction.

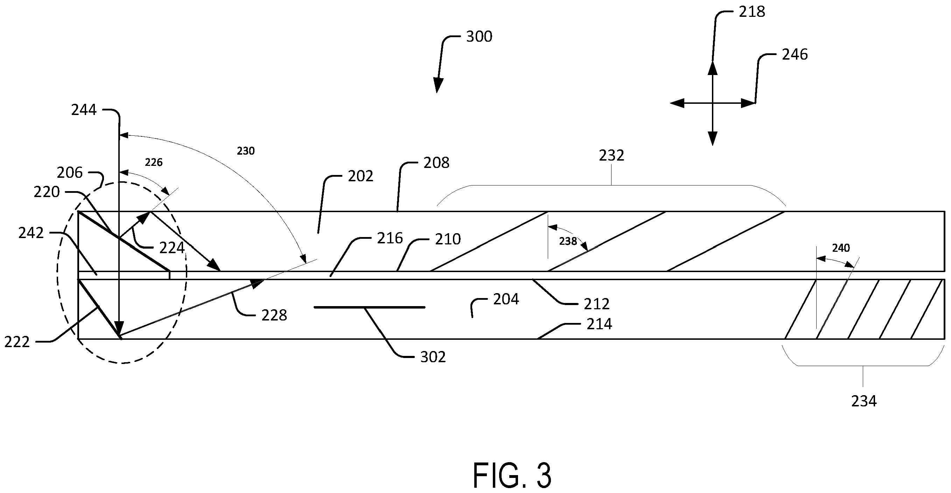

Fig. 3 illustrates a top plan view of another stacked optical waveguide 300, in accordance with various examples of the present disclosure. The stacked optical waveguide 300 has many similar structures to that of the stacked optical waveguide 200. As such, the same numbering and naming is used. For simplicity, only features specific to the stacked optical waveguide 300 are discussed. It should be assumed that any of the features of the stacked optical waveguide 200 (other than those specifically called out for the stacked optical waveguide 300 and/or specific to the stacked optical waveguide 200) are applicable to the stacked optical waveguide 300.

Similar to the stacked optical waveguide 200, the reflective element 222 of the stacked optical waveguide 300 may have a shallower angle relative to the normal axis 218. Instead of extending the reflective element 222 past the second waveguide second major surface 214, as in the stacked optical waveguide 200, the reflective element 222 in the stacked optical waveguide 300 extends only to the second waveguide second major surface 214. As such, the reflective element 222 may not receive the entire aperture width of the light that was passed through the partially reflective element 220. In other words, the partially-reflective element 220 may receive an entire aperture width of the incident beam 244, and the reflective element 222 may receive a portion of the aperture width of the incident beam 244. Accordingly, a third group of facets (e.g., the third group of facets 236) may not be necessary.

In the stacked waveguide 300, the first waveguide 202 contains the first group of facets 232. The second waveguide 204 contains the second group of facets 234 without the third group of facets 236. To compensate for the shorter length of the reflective element 222, a homogenizer 302 may be implemented in the second waveguide 204 between the coupling-in element 206 and the second group of facets 234. The homogenizer 302 may be disposed in a parallel plane that is, vertically, about midway between the second waveguide second major surface 214 and the second waveguide first major surface 212. The first waveguide 202 may not require a homogenizer.

The homogenizer 302 may be any type of light homogenizer configured to provide improved illumination uniformity. For example, the homogenizer 302 may comprise a partial plane reflector as a semi-reflective surface, a partially transmissive surface, or film added within the second waveguide 204. The homogenizer 302 may effectively double a number of reflected beams within the second waveguide 204 by reflecting light beams traversing the second waveguide 204 (e.g., due to TIR) in an ascending or descending manner. By ascending, some portion of light from below the homogenizer 302 may reflect off a lower surface of the homogenizer 302, and a remaining portion of the light may pass through the homogenizer, effectively doubling the number of light beams. By descending, some portion of light from above the homogenizer 302 may reflect off an upper surface of the homogenizer 302, and a remaining portion of the light may pass through the homogenizer, effectively doubling the number of light beams.

By having two waveguides without a protrusion to compensate for an extended length of the reflective element 222, a foveated image may be produced in a compact form factor. Doing so may enable the stacked optical waveguide 300 to take advantage of positive aspects of varying facet angles (e.g., higher acquity/larger aperture in a center of the projected image and larger field of view away from the center).

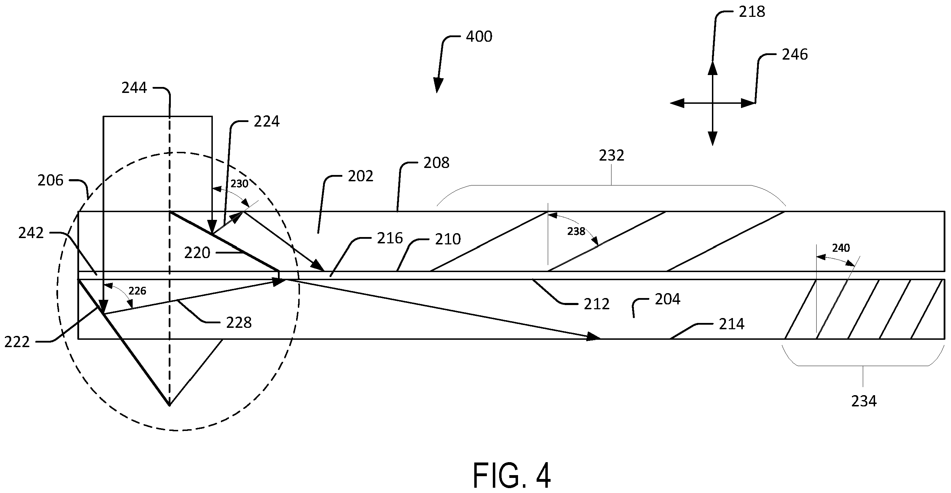

Fig. 4 illustrates a top plan view of another stacked optical waveguide 400, in accordance with various examples of the present disclosure. The stacked optical waveguide 300 has many similar structures to that of the stacked optical waveguide 200. As such, the same numbering and naming is used. For simplicity, only features specific to the stacked optical waveguide 400 are discussed. It should be assumed that any of the features of the stacked optical waveguide 200 (other than those specifically called out for the stacked optical waveguide 400 and/or specific to the stacked optical waveguide 200) are applicable to the stacked optical waveguide 400.

In the stacked optical waveguide 400, the partially-reflective element 220 and the reflective element 222 may not overlap when viewed along the normal axis 218. In this implementation, the partially-reflective element 220 receives a first portion of the incident beam 244 and the reflective element 222 receives a second portion of the incident beam. To illustrate, the incident beam 244 has been split into two beams (one for each element). The portions may be mutually exclusive. If they are mutually exclusive, the partially-reflective element 220 may be fully reflective. Similar to the stacked optical waveguide 200, the reflective element 222 of the stacked optical waveguide 400 may have a shallower angle relative to the normal axis 218. Also, the reflective element 222 may extend past the second waveguide second major surface 214, as in the stacked optical waveguide 200. Because the reflective element 220 may only receive the second portion of the incident beam 244, a third group of facets (e.g., the third group of facets 236) may not be necessary.

In the stacked waveguide 300, the first waveguide 202 contains the first group of facets 232. The second waveguide contains the second group of facets 234 without the third group of facets 236.

By having two waveguides with mutually exclusive portions of the incident beam 244, a foveated image may be produced with minimal illuminance loss. Doing so may enable the stacked optical waveguide 300 to take advantage of positive aspects of varying facet angles (e.g., higher acquity/larger aperture in a center of the projected image and larger field of view away from the center).

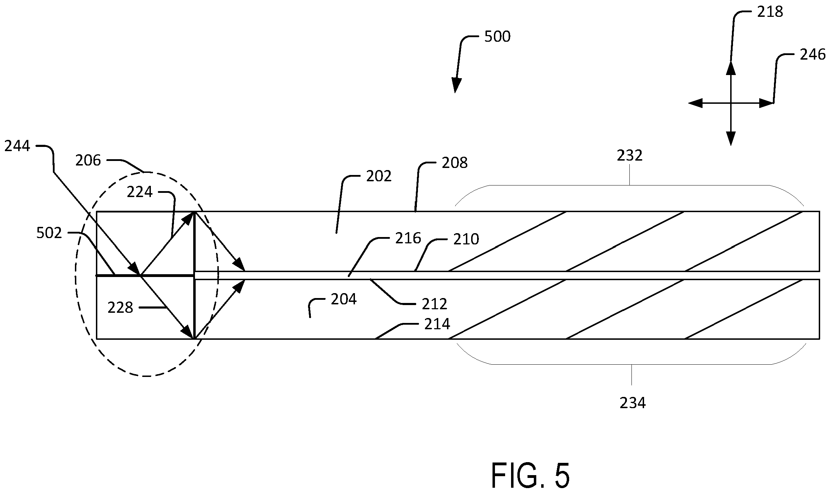

Fig. 5 illustrates a top plan view of another stacked optical waveguide 500, in accordance with various examples of the present disclosure. The stacked optical waveguide 500 has many similar structures to that of the stacked optical waveguide 200. As such, the same numbering and naming is used. For simplicity, only features specific to the stacked optical waveguide 500 are discussed. It should be assumed that any of the features of the stacked optical waveguide 200 (other than those specifically called out for the stacked optical waveguide 500 and/or specific to the stacked optical waveguide 200) are applicable to the stacked optical waveguide 500.

In the stacked optical waveguide 500, the coupling-in element 206 may be implemented as a stand-alone structure that is attached to ends of the first and second waveguides 202, 204 (similar to the alternative described in regard to the stacked optical waveguide 200). Alternatively, the structures contained therein may be implemented in one or more of the first waveguide 202 or the second waveguide 204 (similar to the stacked optical waveguide 200).

The stacked optical waveguide 500 is configured to receive the incident beam 244 at an angle other than parallel to the normal axis 218. The coupling-in element 206 contains a beam splitter 502 that is parallel to the major surfaces and between the first and second waveguides 202, 204 (although disposed adjacent to them) along the normal axis 218. The beam splitter 502 is configured to receive the incident beam 244 and split it into the first beam 224 and the second beam 228. The first beam 224 and the second beam 228 have similar incident angles (e.g., into their respective waveguides) although they may be mirrors of each other and/or have different corresponding reflection points off the respective major surfaces along the facet axis 246.

In the stacked waveguide 500, the first waveguide 202 contains the first group of facets 232. The second waveguide contains the second group of facets 234 without the third group of facets 236. The facet angles of the first group of facets 232 and the second group of facets 234 may be similar. Furthermore, the first group of facets 232 and the second group of facets 234 may be aligned along the facet axis 246.

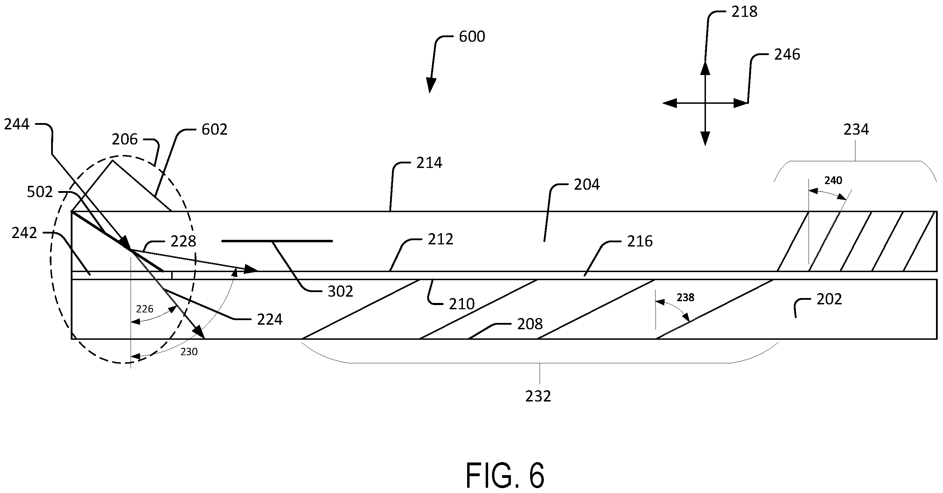

Fig. 6 illustrates a top plan view of another stacked optical waveguide 600, in accordance with various examples of the present disclosure. The stacked optical waveguide 600 has many similar structures to that of the stacked optical waveguide 200. As such, the same numbering and naming is used. For simplicity, only features specific to the stacked optical waveguide 600 are discussed. It should be assumed that any of the features of the stacked optical waveguide 200 (other than those specifically called out for the stacked optical waveguide 600 and/or specific to the stacked optical waveguide 200) are applicable to the stacked optical waveguide 600.

In the example illustration, the first waveguide 202 is beneath the second waveguide 204. This ensures that the relationships of the beam incident angles and the facet angles (e.g., shallow vs non-shallow waveguides) are similar to those of stacked optical waveguide 200. The stacked optical waveguide 600, similar to the stacked waveguide 500, is configured to receive the incident beam 244 at an angle other than parallel to the normal axis 218.

The coupling-in element 206 contains a prism 602 that is configured to refract the incident beam 244 onto the beam splitter 502. The beam splitter 502, which is implemented within a same substrate as the second waveguide 204 (e.g., between planes of the second waveguide first major surface 212 and the second waveguide second major surface) and at an angle that is not parallel to the facet axis 246, is configured to split the refracted incident beam 244 into the first beam 224 and the second beam 228. To do so, the beam splitter 502 may be disposed at an oblique angle to the normal axis 218 and the facet axis 246. As in the stacked optical waveguide 200, the first incident angle 226 may be less than the second incident angle 228.

The stacked optical waveguide 600 may contain the first group of facets 232 and the second group of facets 234 without the third group of facets 236. In the stacked optical waveguide 600, the second group of facets 234 may be configured to couple out the second beam 228 out of the stacked optical waveguide 600, and the first group of facets 232 may be configured to couple out the first beam 224 via the second waveguide 204. The stacked optical waveguide 600 may also contain the homogenizer 302 disposed within the second waveguide 204 in a similar location to that of the stacked optical waveguide 300. The first waveguide 202 may not require a homogenizer.

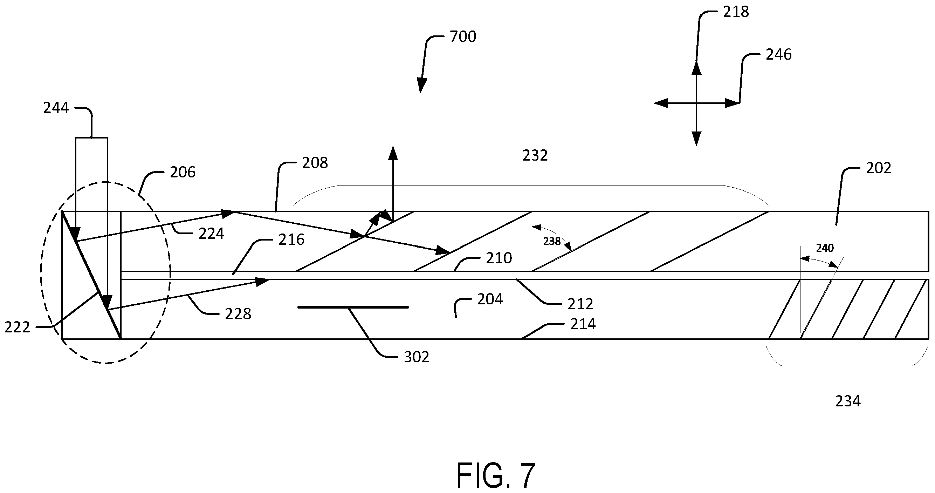

Fig. 7 illustrates a top plan view of another stacked optical waveguide 700, in accordance with various examples of the present disclosure. The stacked optical waveguide 700 has many similar structures to that of the stacked optical waveguide 200. As such, the same numbering and naming is used. For simplicity, only features specific to the stacked optical waveguide 700 are discussed. It should be assumed that any of the features of the stacked optical waveguide 200 (other than those specifically called out for the stacked optical waveguide 700 and/or specific to the stacked optical waveguide 200) are applicable to the stacked optical waveguide 700.

In the stacked optical waveguide 700, the coupling-in element 206 may be implemented as a stand-alone structure that is attached to ends of the first and second waveguides 202, 204 (similar to the alternative described in regard to the stacked optical waveguide 200). Alternatively, the structures contained therein may be implemented in one or more of the first waveguide 202 or the second waveguide 204 (similar to the stacked optical waveguide 200).

The coupling-in element 206 does not contain the partially-reflective element 220, and the reflective element 222 extends along the normal axis from the first waveguide first major surface 208 to the second waveguide second major surface 214. The reflective element 222 is configured to receive an entire aperture of the incident beam 244 (illustrated as two beams) and reflect a first portion of the incident beam 244 into the first waveguide 202 as the first beam 224 and a second portion of the incident beam 244 into the second waveguide 204 as the second beam 228. The first beam 224 and the second beam 228 may have similar incident angles. The second waveguide 204 may contain the homogenizer 302 to compensate for not receiving the entire aperture of the incident beam 244. The first waveguide 202 may not require a homogenizer.

Similar to the stacked optical waveguide 200, the first facet angle 238 may be less than the second facet angle 240. However, the first group of facets 232 may not be configured to directly couple out the first beam 224. Instead, each of the first group of facets 232 may be configured to receive the first beam 224 and reflect a portion of the first beam 224 to create a reflected beam at an angle that is less than the critical angle of the first waveguide 202. The reflected beam may then reflect off the first waveguide first major surface 208 and back onto the respective facet. The respective facet may then couple out the reflected beam out of the first waveguide 202.

In this way, the stacked optical waveguide 700 can utilize a coupling-in element 206 with a single reflective element and still achieve the benefits of multiple facet angles. Doing so may lower complexity and cost of the stacked optical waveguide 700 compared to other waveguides.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "includes", "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Further, the terms up, upper, down, lower, above, below, left, right, forward, rearward, and the like are intended to be understood in the context of the representations described and illustrated above so that a wearable device may have such an orientation in reference to the frame or to various elements as supported by the frame or as illustrated in the drawing figures.

The corresponding structures, materials, acts, and equivalents of all means or step plus function elements, if any, in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The various embodiments were chosen and described in order to best explain the principles of the invention and the practical application, and to enable others of ordinary skill in the art to understand the invention for various embodiments with various modifications as are suited to the particular use contemplated.

### Examples:

Example 1a: An apparatus comprising: a first waveguide comprising a first waveguide first major surface and a first waveguide second major surface; a second waveguide comprising a second waveguide first major surface and a second waveguide second major surface, the second waveguide first major surface being separated from the first waveguide second major surface by a separation layer; a coupling-in element configured to: couple in a first beam into the first waveguide at a first angle of incidence that is greater than a critical angle of the first waveguide; and couple in a second beam into the second waveguide at a second angle of incidence that is greater than the first angle of incidence; a first group of facets arranged in the first waveguide between the first waveguide first major surface and the first waveguide second major surface and configured to couple out the first beam out of the first waveguide; and a second group of facets arranged in the second waveguide between the second waveguide first major surface and the second waveguide second major surface and configured to couple out the second beam out of the second waveguide.

Example 2a: The apparatus according to example 1a, wherein the first angle of incidence is between 45 degrees to 55 degrees from a normal axis that is normal to the first waveguide first major surface, the first waveguide second major surface, the second waveguide first major surface, and the second waveguide second major surface, and wherein the second angle of incidence is between 55 degrees to 89 degrees from the normal axis.

Example 3a: The apparatus according to example 1a or 2a, wherein the first group of facets are arranged at a first facet angle relative to a normal axis that is normal to the first waveguide first major surface, the first waveguide second major surface, the second waveguide first major surface, and the second waveguide second major surface, and wherein the second group of facets are arranged at a second facet angle relative to the normal axis.

Example 4a: The apparatus according to any of examples 1a-3a, wherein the first facet angle is different from the second facet angle.

Example 5a: The apparatus according to any of examples 1a-4a, wherein the first facet angle is greater than the second facet angle.

Example 6a: The apparatus according to any of examples 1a-5a, wherein the first waveguide first major surface, the first waveguide second major surface, the second waveguide first major surface, and the second waveguide second major surface extend along a facet axis, wherein the first waveguide and the second waveguide are superimposed along a normal axis that is orthogonal to the facet axis, wherein the first group of facets are arranged in the first waveguide at a first position along the facet axis, and wherein at least a portion of the second group of facets are arranged in the second waveguide at a second position along the facet axis that is different from the first position along the facet axis.

Example 7a: The apparatus according to example 6a, wherein the second position along the facet axis is further from the coupling-in element than the first position along the facet axis.

Example 8a: The apparatus according to example 6a or 7a, further comprising: a third group of facets arranged in the second waveguide between the second waveguide first major surface and the second waveguide second major surface and configured to couple out the second beam out of the second waveguide, wherein at least a portion of the third group of facets are arranged in the second waveguide at a third position along the facet axis that is different from the first position along the facet axis.

Example 9a: The apparatus according to example 8a, wherein the third position along the facet axis is closer to the coupling-in element than the first position along the facet axis.

Example 10a: The apparatus according to example 1a, further comprising: a third group of facets arranged in the second waveguide between the second waveguide first major surface and the second waveguide second major surface and configured to couple out the second beam out of the second waveguide, wherein the first waveguide first major surface, the first waveguide second major surface, the second waveguide first major surface, and the second waveguide second major surface extend along a facet axis, wherein the first waveguide and the second waveguide are superimposed along a normal axis that is orthogonal to the facet axis, wherein the first group of facets are arranged in the first waveguide at a first position along the facet axis, wherein at least a portion of the second group of facets are arranged in the second waveguide at a second position along the facet axis that is different from the first position along the facet axis, wherein at least a portion of the third group of facets are arranged in the second waveguide at a third position along the facet axis that is different from the first position, and wherein the first position along the facet axis is between the second position along the facet axis and the third position along the facet axis.

Example 11 a: The apparatus according to any of examples 1a-7a, further comprising: a homogenizer arranged in the second waveguide between the coupling-in element and the second group of facets and configured to duplicate the second beam effective to increase a number of beams that are reflected within the second waveguide and incident on the second group of facets.

Example 12a: The apparatus according to any of examples 1a-11a, wherein the coupling-in element comprises: a partially-reflective element configured to couple in the first beam into the first waveguide at the first angle of incidence and pass a portion of an incident beam to a reflective element; and the reflective element configured to couple in the second beam into the second waveguide at the second angle of incidence.

Example 13a: The apparatus according to example 12a, wherein the partially-reflective element is coincident with the reflective element when viewed along a normal axis that is normal to the first waveguide first major surface, the first waveguide second major surface, the second waveguide first major surface, and the second waveguide second major surface.

Example 14a: The apparatus according to example 12a, wherein the partially-reflective element surrounds the reflective element when viewed along a normal axis that is normal to the first waveguide first major surface, the first waveguide second major surface, the second waveguide first major surface, and the second waveguide second major surface.

Example 15a: The apparatus according to example 12a, wherein the partially-reflective element and the reflective element at least partially overlap when viewed along a normal axis that is normal to the first waveguide first major surface, the first waveguide second major surface, the second waveguide first major surface, and the second waveguide second major surface.

Example 16a: The apparatus according to example 12a, wherein the partially-reflective element and the reflective element do not overlap when viewed along a normal axis that is normal to the first waveguide first major surface, the first waveguide second major surface, the second waveguide first major surface, and the second waveguide second major surface.

Example 17a: The apparatus according to example 12a, 13a, 15a, or 16a, wherein the reflective element extends past the second waveguide second major surface.

Example 18a: The apparatus according any of examples 1a-11a, wherein the coupling-in element comprises a prism and a beam splitter, wherein the prism is configured to refract an incident beam towards the beam splitter, wherein the beam splitter is configured to: split the refracted incident beam into a reflected beam and a transmitted beam, couple in the reflected beam into the first waveguide, and couple in the transmitted beam into the second waveguide, wherein the reflected beam is the first beam, and wherein the transmitted beam is the second beam.

Example 19a: The apparatus according to any of examples 1a-18a, wherein the second beam passes through the first waveguide after being coupled out of the second waveguide.

Example 20a: The apparatus according to any of examples 1a-19a, wherein the separation layer comprises an air gap or a low refractive index adhesive.

Example 21a: The apparatus according to any of examples 1a-20a, wherein the coupling-in element is attached to ends of the first waveguide and the second waveguide.

Example 22a: The apparatus according to any of examples 1a-20a, wherein the coupling-in element is formed within same substrates as the first waveguide and the second waveguide.

Example 1b: An apparatus comprising: a first waveguide comprising a first waveguide first major surface and a first waveguide second major surface; a second waveguide comprising a second waveguide first major surface and a second waveguide second major surface, the second waveguide first major surface being separated from the first waveguide second major surface by a separation layer; a coupling-in element configured to: couple in a first beam into the first waveguide at a first angle of incidence that is greater than a critical angle of the first waveguide; and couple in a second beam into the second waveguide at a second angle of incidence that is greater than the first angle of incidence; a first group of facets arranged in the first waveguide between the first waveguide first major surface and the first waveguide second major surface and configured to couple out the first beam out of the first waveguide; a second group of facets arranged in the second waveguide between the second waveguide first major surface and the second waveguide second major surface and configured to couple out the second beam out of the second waveguide; and a third group of facets arranged in the second waveguide between the second waveguide first major surface and the second waveguide second major surface and configured to couple out the second beam out of the second waveguide, wherein the first waveguide first major surface, the first waveguide second major surface, the second waveguide first major surface, and the second waveguide second major surface extend along a facet axis, the first waveguide and the second waveguide are superimposed along a normal axis that is orthogonal to the facet axis, the first group of facets are arranged in the first waveguide at a first position along the facet axis, at least a portion of the second group of facets are arranged in the second waveguide at a second position along the facet axis that is different from the first position along the facet axis, at least a portion of the third group of facets are arranged in the second waveguide at a third position along the facet axis that is different from the first position, and the first position along the facet axis is between the second position along the facet axis and the third position along the facet axis.

Example 2b: The apparatus according to example 1b, wherein the first angle of incidence is between 45 degrees to 55 degrees from a normal axis that is normal to the first waveguide first major surface, the first waveguide second major surface, the second waveguide first major surface, and the second waveguide second major surface, and wherein the second angle of incidence is between 55 degrees to 89 degrees from the normal axis.

Example 3b: The apparatus according to example 1b or 2b, wherein the first group of facets are arranged at a first facet angle relative to a normal axis that is normal to the first waveguide first major surface, the first waveguide second major surface, the second waveguide first major surface, and the second waveguide second major surface, and wherein the second and third groups of facets are arranged at a second facet angle relative to the normal axis.

Example 4b: The apparatus according to any of examples 1b-3b, wherein the first facet angle is different from the second facet angle.

Example 5b: The apparatus according to any of examples 1b-4b, wherein the first facet angle is greater than the second facet angle.

Example 6b: The apparatus according to any of examples 1b-5b, wherein the second position along the facet axis is further from the coupling-in element than the first position along the facet axis.

Example 7b: The apparatus according to any of examples 1b-6b, wherein the third position along the facet axis is closer to the coupling-in element than the first position along the facet axis.

Example 8b: The apparatus according to any of examples 1b-7b, wherein the first position along the facet axis is between the second position along the facet axis and the third position along the facet axis.

Example 9b: The apparatus according to any of examples 1b-8b, wherein the coupling-in element comprises: a partially-reflective element configured to couple in the first beam into the first waveguide at the first angle of incidence and pass a portion of an incident beam to a reflective element; and the reflective element configured to couple in the second beam into the second waveguide at the second angle of incidence.

Example 10b: The apparatus according to any of examples 1b-9b, wherein the partially-reflective element is coincident with the reflective element when viewed along a normal axis that is normal to the first waveguide first major surface, the first waveguide second major surface, the second waveguide first major surface, and the second waveguide second major surface.

Example 11b: The apparatus according to any of examples 1b-10b, wherein the partially-reflective element and the reflective element at least partially overlap when viewed along a normal axis that is normal to the first waveguide first major surface, the first waveguide second major surface, the second waveguide first major surface, and the second waveguide second major surface.

Example 12b: The apparatus according to any of examples 1b-11b, wherein the reflective element extends past the second waveguide second major surface.

Example 13b: The apparatus according to any of examples 1b-12b, wherein the second beam passes through the first waveguide after being coupled out of the second waveguide.

Example 14b: The apparatus according to any of examples 1b-13b, wherein the separation layer comprises an air gap or a low refractive index adhesive.

Example 15b: The apparatus according to any of examples 1b-14b, wherein the coupling-in element is attached to ends of the first waveguide and the second waveguide.

Example 16b: The apparatus according to any of examples 1b-15b, wherein the coupling-in element is formed within same substrates as the first waveguide and the second waveguide.

Example 1c: An apparatus comprising: a first waveguide comprising a first waveguide first major surface and a first waveguide second major surface; a second waveguide comprising a second waveguide first major surface and a second waveguide second major surface, the second waveguide first major surface being separated from the first waveguide second major surface by a separation layer; a coupling-in element configured to: couple in a first beam into the first waveguide at a first angle of incidence that is greater than a critical angle of the first waveguide; and couple in a second beam into the second waveguide at a second angle of incidence that is greater than the first angle of incidence; a first group of facets arranged in the first waveguide between the first waveguide first major surface and the first waveguide second major surface and configured to couple out the first beam out of the first waveguide; a second group of facets arranged in the second waveguide between the second waveguide first major surface and the second waveguide second major surface; and a homogenizer arranged in the second waveguide between the coupling-in element and the second group of facets, wherein the homogenizer is configured to duplicate the second beam effective to increase a number of beams that are reflected within the second waveguide and incident on the second group of facets, and the second group of facets are configured to couple out the beams from the homogenizer that are reflected within the second waveguide out of the second waveguide.

Example 2c: The apparatus according to example 1c, wherein the first angle of incidence is between 45 degrees to 55 degrees from a normal axis that is normal to the first waveguide first major surface, the first waveguide second major surface, the second waveguide first major surface, and the second waveguide second major surface, and wherein the second angle of incidence is between 55 degrees to 89 degrees from the normal axis.

Example 3c: The apparatus according to example 1c or 2c, wherein the first group of facets are arranged at a first facet angle relative to a normal axis that is normal to the first waveguide first major surface, the first waveguide second major surface, the second waveguide first major surface, and the second waveguide second major surface, and wherein the second group of facets are arranged at a second facet angle relative to the normal axis.

Example 4c: The apparatus according to any of examples 1c-3c, wherein the first facet angle is different from the second facet angle.

Example 5c: The apparatus according to any of examples 1c-4c, wherein the first facet angle is greater than the second facet angle.

Example 6c: The apparatus according to any of examples 1c-5c, wherein the first waveguide first major surface, the first waveguide second major surface, the second waveguide first major surface, and the second waveguide second major surface extend along a facet axis, wherein the first waveguide and the second waveguide are superimposed along a normal axis that is orthogonal to the facet axis, wherein the first group of facets are arranged in the first waveguide at a first position along the facet axis, and wherein at least a portion of the second group of facets are arranged in the second waveguide at a second position along the facet axis that is different from the first position along the facet axis.

Example 7c: The apparatus according to any of examples 1c-6c, wherein the second position along the facet axis is further from the coupling-in element than the first position along the facet axis.

Example 8c: The apparatus according to any of examples 1c-7c, wherein the coupling-in element comprises: a partially-reflective element configured to couple in the first beam into the first waveguide at the first angle of incidence and pass a portion of an incident beam to a reflective element; and the reflective element configured to couple in the second beam into the second waveguide at the second angle of incidence.

Example 9c: The apparatus according to any of examples 1c-8c, wherein the partially-reflective element surrounds the reflective element when viewed along a normal axis that is normal to the first waveguide first major surface, the first waveguide second major surface, the second waveguide first major surface, and the second waveguide second major surface.

Example 10c: The apparatus according to any of examples 1c-9c, wherein the partially-reflective element and the reflective element at least partially overlap when viewed along a normal axis that is normal to the first waveguide first major surface, the first waveguide second major surface, the second waveguide first major surface, and the second waveguide second major surface.

Example 11c: The apparatus according to any of examples 1c-10c, wherein the partially-reflective element and the reflective element do not overlap when viewed along a normal axis that is normal to the first waveguide first major surface, the first waveguide second major surface, the second waveguide first major surface, and the second waveguide second major surface.

Example 12c: The apparatus according to example 8c-11c, wherein the reflective element extends past the second waveguide second major surface.

Example 13c: The apparatus according any of examples any of examples 1c-12c, wherein the coupling-in element comprises a prism and a beam splitter, wherein the prism is configured to refract an incident beam towards the beam splitter, wherein the beam splitter is configured to: split the refracted incident beam into a reflected beam and a transmitted beam, couple in the reflected beam into the first waveguide, and couple in the transmitted beam into the second waveguide, wherein the reflected beam is the first beam, and wherein the transmitted beam is the second beam.

Example 14c: The apparatus according to any of examples 1c-13c, wherein the second beam passes through the first waveguide after being coupled out of the second waveguide.

Example 15c: The apparatus according to any of examples 1c-14c, wherein the separation layer comprises an air gap or a low refractive index adhesive.

Example 16c: The apparatus according to any of examples 1c-15c, wherein the coupling-in element is attached to ends of the first waveguide and the second waveguide.

Example 17c: The apparatus according to any of examples 1c-16c, wherein the coupling-in element is formed within same substrates as the first waveguide and the second waveguide.

Example 1d: An apparatus comprising: a first waveguide comprising a first waveguide first major surface and a first waveguide second major surface; a second waveguide comprising a second waveguide first major surface and a second waveguide second major surface, the second waveguide first major surface being separated from the first waveguide second major surface by a separation layer; a coupling-in element comprising: a partially-reflective element configured to couple in a first beam into the first waveguide at a first angle of incidence that is greater than a critical angle of the first waveguide and pass a portion of an incident beam to a reflective element; and a reflective element configured to couple in a second beam into the second waveguide at a second angle of incidence that is greater than the first angle of incidence; a first group of facets arranged in the first waveguide between the first waveguide first major surface and the first waveguide second major surface and configured to couple out the first beam out of the first waveguide; and a second group of facets arranged in the second waveguide between the second waveguide first major surface and the second waveguide second major surface and configured to couple out the second beam out of the second waveguide.

Example 2d: The apparatus according to example 1d, wherein the first angle of incidence is between 45 degrees to 55 degrees from a normal axis that is normal to the first waveguide first major surface, the first waveguide second major surface, the second waveguide first major surface, and the second waveguide second major surface, and wherein the second angle of incidence is between 55 degrees to 89 degrees from the normal axis.

Example 3d: The apparatus according to example 1d or 2d, wherein the first group of facets are arranged at a first facet angle relative to a normal axis that is normal to the first waveguide first major surface, the first waveguide second major surface, the second waveguide first major surface, and the second waveguide second major surface, and wherein the second group of facets are arranged at a second facet angle relative to the normal axis.

Example 4d: The apparatus according to any of examples 1d-3d, wherein the first facet angle is different from the second facet angle.

Example 5d: The apparatus according to any of examples 1d-4d, wherein the first facet angle is greater than the second facet angle.

Example 6d: The apparatus according to any of examples 1d-5d, wherein the first waveguide first major surface, the first waveguide second major surface, the second waveguide first major surface, and the second waveguide second major surface extend along a facet axis, wherein the first waveguide and the second waveguide are superimposed along a normal axis that is orthogonal to the facet axis, wherein the first group of facets are arranged in the first waveguide at a first position along the facet axis, and wherein at least a portion of the second group of facets are arranged in the second waveguide at a second position along the facet axis that is different from the first position along the facet axis.

Example 7d: The apparatus according to any of examples 1d-6d, wherein the second position along the facet axis is further from the coupling-in element than the first position along the facet axis.

Example 8d: The apparatus according to any of examples 1d-7d, further comprising: a third group of facets arranged in the second waveguide between the second waveguide first major surface and the second waveguide second major surface and configured to couple out the second beam out of the second waveguide, wherein at least a portion of the third group of facets are arranged in the second waveguide at a third position along the facet axis that is different from the first position along the facet axis.

Example 9d: The apparatus according to any of examples 1d-8d, wherein the third position along the facet axis is closer to the coupling-in element than the first position along the facet axis.

Example 10d: The apparatus according to any of examples 1d-9d, further comprising: a third group of facets arranged in the second waveguide between the second waveguide first major surface and the second waveguide second major surface and configured to couple out the second beam out of the second waveguide, wherein the first waveguide first maj or surface, the first waveguide second major surface, the second waveguide first major surface, and the second waveguide second major surface extend along a facet axis, wherein the first waveguide and the second waveguide are superimposed along a normal axis that is orthogonal to the facet axis, wherein the first group of facets are arranged in the first waveguide at a first position along the facet axis, wherein at least a portion of the second group of facets are arranged in the second waveguide at a second position along the facet axis that is different from the first position along the facet axis, wherein at least a portion of the third group of facets are arranged in the second waveguide at a third position along the facet axis that is different from the first position, and wherein the first position along the facet axis is between the second position along the facet axis and the third position along the facet axis.

Example 11d: The apparatus according to any of examples 1d-10d, further comprising: a homogenizer arranged in the second waveguide between the coupling-in element and the second group of facets and configured to duplicate the second beam effective to increase a number of beams that are reflected within the second waveguide and incident on the second group of facets.

Example 12d: The apparatus according to any of examples 1d-11d, wherein the partially-reflective element is coincident with the reflective element when viewed along a normal axis that is normal to the first waveguide first major surface, the first waveguide second major surface, the second waveguide first major surface, and the second waveguide second major surface.

Example 13d: The apparatus according to any of examples 1d-12d, wherein the partially-reflective element surrounds the reflective element when viewed along a normal axis that is normal to the first waveguide first major surface, the first waveguide second major surface, the second waveguide first major surface, and the second waveguide second major surface.

Example 14d: The apparatus according to any of examples 1d-13d, wherein the partially-reflective element and the reflective element at least partially overlap when viewed along a normal axis that is normal to the first waveguide first major surface, the first waveguide second major surface, the second waveguide first major surface, and the second waveguide second major surface.

Example 15d: The apparatus according to any of examples 1d-14d, wherein the partially-reflective element and the reflective element do not overlap when viewed along a normal axis that is normal to the first waveguide first major surface, the first waveguide second major surface, the second waveguide first major surface, and the second waveguide second major surface.

Example 16d: The apparatus according to any of examples 1d-15d, wherein the reflective element extends past the second waveguide second major surface.

Example 17d: The apparatus according to any of examples any of examples 1d-16d, wherein the second beam passes through the first waveguide after being coupled out of the second waveguide.

Example 18d: The apparatus according to any of examples 1d-17d, wherein the separation layer comprises an air gap or a low refractive index adhesive.

Example 19d: The apparatus according to any of examples 1d-18d, wherein the coupling-in element is attached to ends of the first waveguide and the second waveguide.

Example 20d: The apparatus according to any of examples 1d-19d, wherein the coupling-in element is formed within same substrates as the first waveguide and the second waveguide.

Example 1e: An apparatus comprising: a first waveguide comprising a first waveguide first major surface and a first waveguide second major surface; a second waveguide comprising a second waveguide first major surface and a second waveguide second major surface, the second waveguide first major surface being separated from the first waveguide second major surface by a separation layer; a coupling-in element comprising: a first reflective element configured to couple in a first portion of an incident beam as a first beam into the first waveguide at a first angle of incidence that is greater than a critical angle of the first waveguide; and a second reflective element configured to couple in a second portion of the incident beam as a second beam into the second waveguide at a second angle of incidence that is greater than the first angle of incidence; a first group of facets arranged in the first waveguide between the first waveguide first major surface and the first waveguide second major surface and configured to couple out the first beam out of the first waveguide; and a second group of facets arranged in the second waveguide between the second waveguide first major surface and the second waveguide second major surface and configured to couple out the second beam out of the second waveguide.

Example 2e: The apparatus according to example 1e, wherein the first angle of incidence is between 45 degrees to 55 degrees from a normal axis that is normal to the first waveguide first major surface, the first waveguide second major surface, the second waveguide first major surface, and the second waveguide second major surface, and wherein the second angle of incidence is between 55 degrees to 89 degrees from the normal axis.

Example 3e: The apparatus according to example 1e or 2e, wherein the first group of facets are arranged at a first facet angle relative to a normal axis that is normal to the first waveguide first major surface, the first waveguide second major surface, the second waveguide first major surface, and the second waveguide second major surface, and wherein the second group of facets are arranged at a second facet angle relative to the normal axis.

Example 4e: The apparatus according to any of examples 1e-3e, wherein the first facet angle is different from the second facet angle.

Example 5e: The apparatus according to any of examples 1e-4e, wherein the first facet angle is greater than the second facet angle.

Example 6e: The apparatus according to any of examples 1e-5e, wherein the first waveguide first major surface, the first waveguide second major surface, the second waveguide first major surface, and the second waveguide second major surface extend along a facet axis, wherein the first waveguide and the second waveguide are superimposed along a normal axis that is orthogonal to the facet axis, wherein the first group of facets are arranged in the first waveguide at a first position along the facet axis, and wherein at least a portion of the second group of facets are arranged in the second waveguide at a second position along the facet axis that is different from the first position along the facet axis.

Example 7e: The apparatus according to any of examples 1e-6e, wherein the second position along the facet axis is further from the coupling-in element than the first position along the facet axis.

Example 8e: The apparatus according to any of examples 1e-7e, further comprising: a homogenizer arranged in the second waveguide between the coupling-in element and the second group of facets and configured to duplicate the second beam effective to increase a number of beams that are reflected within the second waveguide and incident on the second group of facets.

Example 9e: The apparatus according to any of examples 1e-8e, wherein the partially-reflective element and the reflective element do not overlap when viewed along a normal axis that is normal to the first waveguide first major surface, the first waveguide second major surface, the second waveguide first major surface, and the second waveguide second major surface.

Example 10e: The apparatus according to any of examples 1e-9e, wherein the second reflective element extends past the second waveguide second major surface.

Example 11e: The apparatus according to any of examples 1e-10e, wherein the second beam passes through the first waveguide after being coupled out of the second waveguide.

Example 12e: The apparatus according to any of examples 1e-11e, wherein the separation layer comprises an air gap or a low refractive index adhesive.

Example 13e: The apparatus according to any of examples 1e-12e, wherein the coupling-in element is attached to ends of the first waveguide and the second waveguide.

Example 14e: The apparatus according to any of examples 1e-13e, wherein the coupling-in element is formed within same substrates as the first waveguide and the second waveguide.

Example 1f: An apparatus comprising: a first waveguide comprising a first waveguide first major surface and a first waveguide second major surface; a second waveguide comprising a second waveguide first major surface and a second waveguide second major surface, the second waveguide first major surface being separated from the first waveguide second major surface by a separation layer; a coupling-in element configured to: couple in a first beam into the first waveguide at an angle of incidence that is greater than a critical angle of the first waveguide; and couple in a second beam into the second waveguide at the angle of incidence, wherein the coupling-in element comprises a beam splitter configured to: split an incident beam into a reflected beam and a transmitted beam, couple in the reflected beam as the first beam into the first waveguide, and couple in the transmitted beam as the second beam into the second waveguide; a first group of facets arranged in the first waveguide between the first waveguide first major surface and the first waveguide second major surface and configured to couple out the first beam out of the first waveguide; and a second group of facets arranged in the second waveguide between the second waveguide first major surface and the second waveguide second major surface and configured to couple out the second beam out of the second waveguide.

Example 2f: The apparatus according to example 1a, wherein the first angle of incidence is between 45 degrees to 55 degrees from a normal axis that is normal to the first waveguide first major surface, the first waveguide second major surface.

Example 3f: The apparatus according to example 1a or 2a, wherein the first and second groups of facets are arranged at a facet angle relative to a normal axis that is normal to the first waveguide first major surface, the first waveguide second major surface, the second waveguide first major surface, and the second waveguide second major surface.

Example 4f: The apparatus according to any of examples 1f-3f, wherein the second beam mirrors the first beam relative to a plane of the beam splitter.

Example 5f: The apparatus according to any of examples 1f-4f, wherein the beam splitter is parallel to the first waveguide first major surface, the first waveguide second major surface, the second waveguide first major surface, and the second waveguide second major surface

Example 6f: The apparatus according to any of examples 1f-5f, wherein the second beam passes through the first waveguide after being coupled out of the second waveguide.

Example 7f: The apparatus according to any of examples 1f-6f, wherein the separation layer comprises an air gap or a low refractive index adhesive.

Example 8f: The apparatus according to any of examples 1f-7f, wherein the coupling-in element is attached to ends of the first waveguide and the second waveguide.

Example 9f: The apparatus according to any of examples 1f-8f, wherein the coupling-in element is formed within same substrates as the first waveguide and the second waveguide.

The coupling-in element may contain a prism and a beam splitter. The prism may be configured to refract an incident beam towards the beam splitter. The beam splitter may be configured to: split the refracted incident beam into a reflected beam and a transmitted beam, couple in the reflected beam into the first waveguide, and couple in the transmitted beam into the second waveguide. The reflected beam may be the first beam and the transmitted beam may be the second beam. The apparatus may also include a first group of facets arranged in the first waveguide between the first waveguide first major surface and the first waveguide second major surface and configured to couple out the first beam out of the first waveguide. The apparatus may also include a second group of facets arranged in the second waveguide between the second waveguide first major surface and the second waveguide second major surface.

Example 1g: An apparatus comprising: a first waveguide comprising a first waveguide first major surface and a first waveguide second major surface; a second waveguide comprising a second waveguide first major surface and a second waveguide second major surface, the second waveguide first major surface being separated from the first waveguide second major surface by a separation layer; a coupling-in element configured to: couple in a first beam into the first waveguide at a first angle of incidence that is greater than a critical angle of the first waveguide; and couple in a second beam into the second waveguide at a second angle of incidence that is greater than the first angle of incidence, wherein the coupling-in element comprises a prism and a beam splitter, the prism is configured to refract an incident beam towards the beam splitter, and the beam splitter is configured to: split the refracted incident beam into a reflected beam and a transmitted beam, couple in the reflected beam as the second beam into the second waveguide, and couple in the transmitted beam as the first beam into the first waveguide; a first group of facets arranged in the first waveguide between the first waveguide first major surface and the first waveguide second major surface and configured to couple out the first beam out of the first waveguide; and a second group of facets arranged in the second waveguide between the second waveguide first major surface and the second waveguide second major surface and configured to couple out the second beam out of the second waveguide.

Example 2g: The apparatus according to example 1g, wherein the first angle of incidence is between 45 degrees to 55 degrees from a normal axis that is normal to the first waveguide first major surface, the first waveguide second major surface, the second waveguide first major surface, and the second waveguide second major surface, and wherein the second angle of incidence is between 55 degrees to 89 degrees from the normal axis.

Example 3g: The apparatus according to example 1g or 2g, wherein the first group of facets are arranged at a first facet angle relative to a normal axis that is normal to the first waveguide first major surface, the first waveguide second major surface, the second waveguide first major surface, and the second waveguide second major surface, and wherein the second group of facets are arranged at a second facet angle relative to the normal axis.

Example 4g: The apparatus according to any of examples 1g-3g, wherein the first facet angle is different from the second facet angle.

Example 5g: The apparatus according to any of examples 1g-4g, wherein the first facet angle is greater than the second facet angle.

Example 6g: The apparatus according to any of examples 1g-5g, wherein the first waveguide first major surface, the first waveguide second major surface, the second waveguide first major surface, and the second waveguide second major surface extend along a facet axis, wherein the first waveguide and the second waveguide are superimposed along a normal axis that is orthogonal to the facet axis, wherein the first group of facets are arranged in the first waveguide at a first position along the facet axis, and wherein at least a portion of the second group of facets are arranged in the second waveguide at a second position along the facet axis that is different from the first position along the facet axis.

Example 7g: The apparatus according to any of examples 1g-6g, wherein the second position along the facet axis is further from the coupling-in element than the first position along the facet axis.

Example 8g: The apparatus according to any of examples 1g-7g, further comprising: a homogenizer arranged in the second waveguide between the coupling-in element and the second group of facets and configured to duplicate the second beam effective to increase a number of beams that are reflected within the second waveguide and incident on the second group of facets.

Example 9g: The apparatus according any of examples 1g-8g, wherein the coupling-in element comprises a prism and a beam splitter, wherein the prism is configured to refract an incident beam towards the beam splitter, wherein the beam splitter is configured to: split the refracted incident beam into a reflected beam and a transmitted beam, couple in the reflected beam into the first waveguide, and couple in the transmitted beam into the second waveguide, wherein the reflected beam is the first beam, and wherein the transmitted beam is the second beam.

Example 10g: The apparatus according to any of examples 1g-9g, wherein the first beam passes through the second waveguide after being coupled out of the first waveguide.

Example 11g: The apparatus according to any of examples 1g-10g, wherein the separation layer comprises an air gap or a low refractive index adhesive.

Example 12g: The apparatus according to any of examples 1g-11g, wherein the coupling-in element is attached to ends of the first waveguide and the second waveguide.

Example 13g: The apparatus according to any of examples 1g-12g, wherein the coupling-in element is formed within same substrates as the first waveguide and the second waveguide.

Example 14g: The apparatus according to any of examples 1g-13g, wherein an angle of the incident beam is not perpendicular to the first waveguide first major surface, the first waveguide second major surface, the second waveguide first major surface, and the second waveguide second major surface.

Example 15g: The apparatus according to any of examples 1g-14g, wherein the beam splitter is not parallel to the first waveguide first major surface, the first waveguide second major surface, the second waveguide first major surface, and the second waveguide second major surface

Example 16g: The apparatus according to any of examples 1g-15g, wherein the beam splitter is disposed between the second waveguide first major surface and the second waveguide second major surface.

Example 1h: An apparatus comprising: a first waveguide comprising a first waveguide first major surface and a first waveguide second major surface; a second waveguide comprising a second waveguide first major surface and a second waveguide second major surface, the second waveguide first major surface being separated from the first waveguide second major surface by a separation layer; a coupling-in element configured to: couple in a first portion of an incident beam as a first beam into the first waveguide at an angle of incidence that is greater than a critical angle of the first waveguide; and couple in a second portion of the incident beam as a second beam into the second waveguide at the angle of incidence to create a second beam; a first group of facets arranged in the first waveguide between the first waveguide first major surface and the first waveguide second major surface and configured to partially reflect the first beam to create a reflected beam with an angle of incidence that is lower than the first angle of incidence and a transmitted beam at the first angle of incidence and couple out the reflected beam out of the first waveguide; and a second group of facets arranged in the second waveguide between the second waveguide first major surface and the second waveguide second major surface and configured to couple out the second beam out of the second waveguide.

Example 2h: The apparatus according to example 1h, wherein the angle of incidence is between 45 degrees to 55 degrees from a normal axis that is normal to the first waveguide first major surface, the first waveguide second major surface, the second waveguide first major surface, and the second waveguide second major surface.

Example 3h: The apparatus according to example 1h or 2h, wherein the first group of facets are arranged at a first facet angle relative to a normal axis that is normal to the first waveguide first major surface, the first waveguide second major surface, the second waveguide first major surface, and the second waveguide second major surface, and wherein the second group of facets are arranged at a second facet angle relative to the normal axis.

Example 4h: The apparatus according to any of examples 1h-3h, wherein the first facet angle is different from the second facet angle.

Example 5h: The apparatus according to any of examples 1h-4h, wherein the first facet angle is greater than the second facet angle.

Example 6h: The apparatus according to any of examples 1h-5h, wherein the first waveguide first major surface, the first waveguide second major surface, the second waveguide first major surface, and the second waveguide second major surface extend along a facet axis, wherein the first waveguide and the second waveguide are superimposed along a normal axis that is orthogonal to the facet axis, wherein the first group of facets are arranged in the first waveguide at a first position along the facet axis, and wherein at least a portion of the second group of facets are arranged in the second waveguide at a second position along the facet axis that is different from the first position along the facet axis.

Example 7h: The apparatus according to any of examples 1h-6h, wherein the second position along the facet axis is further from the coupling-in element than the first position along the facet axis.

Example 8h: The apparatus according to any of examples 1h-7h, further comprising: a homogenizer arranged in the second waveguide between the coupling-in element and the second group of facets and configured to duplicate the second beam effective to increase a number of beams that are reflected within the second waveguide and incident on the second group of facets.

Example 9h: The apparatus according to any of examples 1h-8h, wherein the coupling-in element comprises a reflective element.

Example 10h: The apparatus according to any of examples 1h-9h, wherein the reflective element does not extend past the second waveguide second major surface.

Example 11h: The apparatus according to any of examples 1h-10h, wherein the second beam passes through the first waveguide after being coupled out of the second waveguide.

Example 12h: The apparatus according to any of examples 1h-11h, wherein the separation layer comprises an air gap or a low refractive index adhesive.

Example 13h: The apparatus according to any of examples 1h-12h, wherein the coupling-in element is attached to ends of the first waveguide and the second waveguide.

Example 14h: The apparatus according to any of examples 1h-13h, wherein the coupling-in element is formed within same substrates as the first waveguide and the second waveguide.

## Claims

1. An apparatus comprising:
a first waveguide comprising a first waveguide first major surface and a first waveguide second major surface that extend along a facet axis;
a second waveguide comprising a second waveguide first major surface and a second waveguide second major surface that extend along the facet axis, wherein:
the second waveguide first major surface is separated from the first waveguide second major surface by a separation layer; and
the first waveguide and the second waveguide are superimposed along a normal axis that is orthogonal to the facet axis;
a coupling-in element configured to:
couple in a first portion of an incident beam as a first beam into the first waveguide at a first angle of incidence that is greater than a critical angle of the first waveguide; and
couple in a second portion of the incident beam as a second beam into the second waveguide at a second angle of incidence that is greater than the first angle of incidence;
a first group of facets arranged in the first waveguide between the first waveguide first major surface and the first waveguide second major surface at a first position along the facet axis and configured to couple out the first beam out of the first waveguide; and
a second group of facets arranged in the second waveguide between the second waveguide first major surface and the second waveguide second major surface at a second position along the facet axis that is different from the first position along the facet axis and configured to couple out the second beam out of the second waveguide.

2. The apparatus according to claim 1,
wherein the first angle of incidence is between 45 degrees to 55 degrees from a normal axis that is normal to the first waveguide first major surface, the first waveguide second major surface, the second waveguide first major surface, and the second waveguide second major surface, and
wherein the second angle of incidence is between 55 degrees to 89 degrees from the normal axis.

3. The apparatus according to any of previous claims,
wherein the first group of facets are arranged at a first facet angle relative to a normal axis that is normal to the first waveguide first major surface, the first waveguide second major surface, the second waveguide first major surface, and the second waveguide second major surface, and
wherein the second group of facets are arranged at a second facet angle relative to the normal axis that is different than the first facet angle,
and preferably wherein the first facet angle is greater than the second facet angle.

4. The apparatus according to any of previous claims,
wherein the second position along the facet axis is further from the coupling-in element than the first position along the facet axis.

5. The apparatus according to any of previous claims, further comprising:
a third group of facets arranged in the second waveguide between the second waveguide first major surface and the second waveguide second major surface and configured to couple out the second beam out of the second waveguide,
wherein the third group of facets are arranged in the second waveguide at a third position along the facet axis that is different from the first position along the facet axis.

6. The apparatus according to claim 5,
wherein the third position along the facet axis is closer to the coupling-in element than the first position along the facet axis.

7. The apparatus according to claim 5,
wherein the first position along the facet axis is between the second position along the facet axis and the third position along the facet axis.

8. The apparatus according to any of previous claims, further comprising:
a homogenizer arranged in the second waveguide between the coupling-in element and the second group of facets along the facet axis and configured to duplicate the second beam effective to increase a number of beams that are reflected within the second waveguide and incident on the second group of facets.

9. The apparatus according to any of previous claims,
wherein the coupling-in element comprises:
a partially-reflective element configured to create the first beam and couple in the first beam into the first waveguide at the first angle of incidence and pass a portion of the incident beam to a reflective element; and
the reflective element configured to couple in the portion of the incident beam as the second beam into the second waveguide at the second angle of incidence

10. The apparatus according to claim 9,
wherein the partially-reflective element is coincident with or surrounds the reflective element when viewed along the normal axis.

11. The apparatus according to claim 9,
wherein the partially-reflective element and the reflective element at least partially overlap or do not overlap when viewed along the normal axis.

12. The apparatus according to claim 9,
wherein the reflective element extends past the second waveguide second major surface.

13. The apparatus according to any of previous claims,
wherein the coupling-in element comprises a prism and a beam splitter,
wherein the prism is configured to refract an incident beam towards the beam splitter,
wherein the beam splitter is configured to:
split the refracted incident beam into a reflected beam and a transmitted beam,
couple in the reflected beam into the first waveguide, and
couple in the transmitted beam into the second waveguide,
wherein the reflected beam is the first beam, and
wherein the transmitted beam is the second beam.

14. The apparatus according to any of previous claims,
wherein the second beam passes through the first waveguide after being coupled out of the second waveguide.

15. The apparatus according to any of previous claims,
wherein the separation layer comprises an air gap or a low refractive index adhesive.
